# EUROPÄISCHE PATENTSCHRIFT

(11) **EP 2 614 303 B1**
(45) Veröffentlichungstag und Bekanntmachung des Hinweises auf die Patenterteilung: **29.04.2015**
(21) Anmeldenummer: 11766991.1
(22) Anmeldetag: 05.10.2011
(51) Int. Cl.: F01K 15/00, F01K 23/10, F22B 35/10

(54) **VERFAHREN ZUM BETREIBEN EINER KOMBINIERTEN GAS- UND DAMPFTURBINENANLAGE SOWIE ZUR DURCHFÜHRUNG DES VERFAHRENS HERGERICHTETE GAS- UND DAMPFTURBINENANLAGE UND ENTSPRECHENDE REGELVORRICHTUNG**
METHOD FOR OPERATING A COMBINED GAS AND STEAM TURBINE SYSTEM, GAS AND STEAM TURBINE SYSTEM FOR CARRYING OUT SAID METHOD, AND CORRESPONDING CONTROL DEVICE
PROCÉDÉ POUR FAIRE FONCTIONNER UN SYSTÈME COMBINÉ DE TURBINES À GAZ ET À VAPEUR, SYSTÈME DE TURBINES À GAZ ET À VAPEUR CONÇU POUR CE PROCÉDÉ ET DISPOSITIF DE RÉGULATION CORRESPONDANT

(30) Priorität: 14.10.2010 DE 102010042458
(43) Veröffentlichungstag der Anmeldung: 17.07.2013
(73) Patentinhaber: Siemens Aktiengesellschaft, 80333 München (DE)
(72) Erfinder: BRÜCKNER, Jan, 91080 Uttenreuth (DE); BURGEMEISTER, Antje, 90429 Nürnberg (DE); THOMAS, Frank, 91056 Erlangen (DE)
(86) Internationale Anmeldenummer: PCT/EP2011/067393
(87) Internationale Veröffentlichungsnummer: WO 2012/049056

(56) Entgegenhaltungen:
- EP-A2- 2 065 641
- WO-A2-2009/150055
- US-A- 5 529 021

## Beschreibung

Die Erfindung betrifft ein Verfahren zum Betreiben einer kombinierten Gas- und Dampfturbinenanlage mit einer Gasturbine und mit einem der Gasturbine abgas- bzw. heizgasseitig nachgeschalteten Abhitzedampferzeuger gemäß dem Oberbegriff des Anspruchs 1. Die Erfindung betrifft weiterhin eine zur Durchführung des Verfahrens hergerichtete Gas- und Dampfturbinenanlage sowie eine entsprechende Regelvorrichtung.

Ein Abhitzedampferzeuger ist ein Wärmetauscher, der Wärme aus einem heißen Gasstrom zurückgewinnt. Abhitzedampferzeuger kommen unter anderem in Gas- und Dampfturbinenanlagen (GUD-Anlagen) zum Einsatz, die überwiegend der Stromerzeugung dienen. Dabei umfasst eine moderne GUD-Anlage üblicherweise ein bis vier Gasturbinen und mindestens eine Dampfturbine, wobei entweder jede Turbine jeweils einen Generator antreibt (Mehrwellenanlage) oder eine Gasturbine mit der Dampfturbine zusammen auf einer gemeinsamen Welle einen einzigen Generator antreibt (Einwellenanlage). Die heißen Abgase der Gasturbine(n) werden dabei in dem Abhitzedampferzeuger zur Erzeugung von Wasserdampf verwendet. Der Dampf wird anschließend der Dampfturbine zugeführt. Typischerweise entfallen ca. zwei Drittel der elektrischen Leistung auf die Gasturbine und ein Drittel auf die Dampfturbine.

Es sei an dieser Stelle der Vollständigkeit halber erwähnt, dass als Strömungsmedium für den Abhitzedampferzeuger sowie die Dampfturbine grundsätzlich verschiedene Stoffe nutzbar sind. Nachfolgend wird beispielhaft auf die Verwendung von Wasser bzw. Wasserdampf Bezug genommen, da dies das mit Abstand gebräuchlichste Strömungsmedium ist.

Analog zu den verschiedenen Druckstufen einer Dampfturbine umfasst auch der Abhitzedampferzeuger üblicherweise eine Mehrzahl von Druckstufen mit im Normalbetrieb unterschiedlichen thermodynamischen Zuständen des jeweils enthaltenen Wasser-Dampf-Gemisches. Im Speisewasser- bzw. Dampfkreislauf durchläuft das Strömungsmedium auf seinem Strömungsweg zunächst einen Economiser, in welchem Restwärme im Abgasstrom zur Vorwärmung des Strömungsmediums genutzt wird. Daran schließt sich der so genannte Verdampfer an, der vorzugsweise als Zwangsdurchlaufverdampfer und insbesondere als so genannter BENSON Verdampfer ausgeführt sein kann. Am Verdampferausgang liegt das Strömungsmedium dann als Dampf oder WasserDampf-Gemisch vor, wobei eventuelle Restnässe in einer dort platzierten Abscheidevorrichtung abgetrennt wird. Der weitergeleitete Dampf wird in der Folge im Überhitzer weiter erhitzt. Danach strömt der überhitze Dampf in den Hochdruckteil der Dampfturbine, wird dort entspannt und der nachfolgenden Druckstufe des Dampferzeugers zugeführt. Dort wird er erneut überhitzt und anschließend in die nächste Druckstufe der Dampfturbine eingeleitet. An den Dampfturbinenausgang schließt sich ein Kondensator an, in dem der entspannte Dampf kondensiert und als Speisewasser einem Reservoir zugeführt wird. Eine Speisewasserpumpe schließlich befördert das Speisewasser aus dem Reservoir wieder in den Economiser. Gesteuert wird der Speisewassermassenstrom dabei über ein der Speisewasserpumpe nachgeschaltetes Regelventil.

Abhängig vom Betriebszustand des Abhitzedampferzeugers und, damit zusammenhängend, von der aktuellen Dampferzeugerleistung wird der Speisewassermassenstrom im Speisewasserkreislauf und insbesondere in dem Verdampfer geregelt. Bei Laständerungen sollte der Verdampferdurchfluss möglichst synchron zum Wärmeeintrag in die Heizflächen des Verdampfers geändert werden, weil sonst eine Abweichung der spezifischen Enthalpie des Strömungsmediums am Austritt des Verdampfers von einem Sollwert nicht sicher vermieden werden kann. Eine solche unerwünschte Abweichung der spezifischen Enthalpie erschwert die Regelung der Temperatur des aus dem Dampferzeuger austretenden Frischdampfes und führt darüber hinaus zu hohen Materialbelastungen und somit zu einer reduzierten Lebensdauer des Dampferzeugers.

Um derartige Abweichungen der spezifischen Enthalpie vom gewünschten Sollwert und daraus resultierende unerwünscht große Temperaturschwankungen in allen Betriebszuständen des Dampferzeugers, also insbesondere auch in transienten Zuständen oder bei Lastwechseln, möglichst gering zu halten, kann die Speisewasserdurchflussregelung in der Art einer so genannten prädiktiven oder vorausschauenden Auslegung ausgestaltet sein. Dabei sollen insbesondere auch bei Lastwechseln die notwendigen Speisewassermassenstromsollwerte in Abhängigkeit vom aktuellen oder für die nächste Zukunft zu erwartenden Betriebszustand bereitgestellt werden. Ein diesbezüglich sehr zweckmäßiges Regelungssystem ist in den Europäischen Offenlegungsschriften EP 2 065 641 A2 und EP 2 194 320 A1, welche beide auf die Anmelderin zurückgehen, beschrieben. Auf die gesamte Offenbarung in diesen Druckschriften wird ausdrücklich Bezug genommen.

Von modernen Kraftwerken werden nicht nur hohe Wirkungsgrade gefordert, sondern auch eine möglichst flexible Betriebsweise. Hierzu gehört außer kurzen Anfahrzeiten und hohen Laständerungsgeschwindigkeiten auch die Möglichkeit, Frequenzstörungen im Stromverbundnetz auszugleichen. Um diese Anforderungen zu erfüllen, muss das Kraftwerk in der Lage sein, Mehrleistungen von beispielsweise 5 % und mehr innerhalb weniger Sekunden zur Verfügung zu stellen.

Dies wird in bisher üblichen GUD-Kraftwerken üblicherweise durch eine Lasterhöhung der Gasturbine realisiert. Unter gewissen Umständen kann es aber insbesondere im oberen Lastbereich möglich sein, dass der gewünschte Leistungsanstieg nicht ausschließlich oder nicht schnell genug durch die Gasturbine bereitgestellt werden kann. Daher werden mittlerweile auch Lösungen verfolgt, bei denen die Dampfturbine ebenfalls einen Beitrag zur Frequenzstützung, vor allem in den ersten Sekunden nach einer Leistungsanforderung, leisten kann und soll.

Dies kann beispielsweise durch das Öffnen teilweise angedrosselter Turbinenventile der Dampfturbine oder eines so genannten Stufenventils geschehen, wodurch der Dampfdruck vor der Dampfturbine abgesenkt wird. Dampf aus dem Dampfspeicher des vorgeschalteten Abhitzedampferzeugers wird dadurch ausgespeichert und der Dampfturbine zugeführt. Mit dieser Maßnahme wird innerhalb weniger Sekunden ein Leistungsanstieg im GUD-Kraftwerk erreicht.

Diese zusätzliche Leistung kann in relativ kurzer Zeit freigesetzt werden, so dass die verzögerte Leistungserhöhung durch die Gasturbine (begrenzt durch deren konstruktions- und betriebsbedingte maximale Laständerungsgeschwindigkeit) zumindest teilweise kompensiert werden kann. Der gesamte Kraftwerksblock macht durch diese Maßnahme unmittelbar einen Leistungssprung und kann durch eine nachfolgende Leistungssteigerung der Gasturbine auch dieses Leistungsniveau dauerhaft halten oder sogar überschreiten, vorausgesetzt die Anlage befand sich zum Zeitpunkt der zusätzlich angeforderten Leistungsreserven im Teillastbereich.

Eine permanente Androsselung der Turbinenventile zur Vorhaltung einer Reserve führt jedoch immer zu einem Wirkungsgradverlust, so dass für eine wirtschaftliche Fahrweise der Grad der Androsselung so gering wie unbedingt notwendig gehalten werden sollte. Zudem weisen einige Bauformen von Abhitzedampferzeugern, so z. B. Zwangdurchlaufdampferzeuger unter Umständen ein erheblich kleineres Speichervolumen auf als z. B. Naturumlaufdampferzeuger. Der Unterschied in der Größe des Speichers hat im oben beschriebenen Verfahren Einfluss auf das Verhalten bei Leistungsänderungen der Dampfturbine des GUD-Kraftwerks.

Es ist daher Aufgabe der Erfindung, ein Verfahren zum Betreiben einer Gas- und Dampfturbinenanlage mit einem Abhitzedampferzeugers der oben genannten Art anzugeben, beim dem bedarfsweise eine Leistungssofortreserve freisetzbar ist, und bei dem der normale betriebliche Wirkungsgrad der Anlage nicht über Gebühr beeinträchtigt wird. Gleichzeitig soll die schnelle Leistungssteigerung unabhängig von der Bauform des Abhitzedampferzeugers ohne wesentliche invasive bauliche Modifikationen am Gesamtsystem ermöglicht werden. Eine weitere Aufgabe der Erfindung ist es, eine für die Durchführung des Verfahrens besonders geeignete Gas- und Dampfturbinenanlage sowie eine entsprechende Regelvorrichtung anzugeben.

Die auf das Verfahren bezogene Aufgabe wird erfindungsgemäß durch die Merkmale des Anspruchs 1 gelöst. Die rückbezogenen Ansprüche beinhalten teilweise vorteilhafte und teilweise für sich selbst erfinderische Weiterbildungen dieser Erfindung.

Ansatzpunkt für die Entwicklung des erfindungsgemäßen Verfahrens ist die Überlegung, den Speisewasserdurchfluss durch den Verdampfer temporär zu erhöhen. Durch diese Maßnahme wird thermische Energie aus dem Verdampfer und den nachfolgenden Überhitzerheizflächen ausgespeichert und in der Dampfturbine in Form von zusätzlicher Leistung entbunden.

Als eine Möglichkeit dies zu realisieren, kann es prinzipiell in Erwägung gezogen werden, einfach vom so genannten "BENSON Control Mode", der aufgrund eines hohen Wirkungsgrades für Standard- oder Normalbetrieb bevorzugt wird, in den so genannten "Level Control Mode" umzuschalten.

Im "Level Control Mode" wird der Verdampfer vereinfacht gesprochen permanent mit Speisewasser überversorgt, also eigentlich überspeist. Das hierdurch vermehrt anfallende noch nicht verdampfte Speisewasser muss sodann in einem nachgeschalteten Abscheider vom Dampf getrennt werden. Auf diese Weise kann zwar die Erhöhung des Speisewassemassenstroms zur Bereitstellung von zusätzlicher Leistung wirksam erfüllt werden, jedoch fällt unter den genannten Umständen auch unerwünschtes Restwasser am Verdampferaustritt an. Darüber hinaus sind aktuelle Speisewasserregelungskonzepte so konzipiert, dass beim Umschaltvorgang zwischen beiden Betriebsmodi keine sprungartige Korrektur der Parameter vorgenommen wird. Stattdessen ist üblicherweise eine allmähliche und damit relativ zeitintensive Überführung zwischen beiden dynamischen Systemzuständen vorgesehen.

Im "BENSON Control Mode" hingegen wird versucht, über eine prädiktive Regelung genau so viel Speisewasser durch den Verdampfer zu leiten, dass dieses möglichst vollständig in Frischdampf mit einem bestimmten thermodynamischen Zustand umgewandelt wird. Vorgegeben wird dabei ein so genannter Überhitzungssollwert am Verdampferausgang. Die Temperatur des Dampfes an besagtem Ausgang soll demnach um einen gewünschten Differenzbetrag über der Siedetemperatur des Mediums liegen. Ermittelt wird dazu zunächst ein Kennwert, der den Wärmestrom in den Verdampfer charakterisiert. Unter Berücksichtigung der in den Bauteilen des Verdampfers zwischengespeicherten Wärmebeträge ergibt sich daraus die für das Speisewasser zu Verfügung stehende thermische Energie. Daraus wiederum kann die Menge an Speisewasser berechnet werden, die mit Hilfe des Wärmeangebots in Dampf mit einer Temperaturüberhöhung gemäß Vorgabe umgewandelt werden kann. Durch eine entsprechende Ansteuerung des der Speisewasserpumpe nachgeschalteten Regelventils wird schließlich dafür gesorgt, dass sich der hierüber kalkulierte Primärsollwert für den Speisewassermassenstrom einstellt.

Zur erfindungsgemäßen Freigabe einer Leistungssofortreserve wird der Überhitzungssollwert von einem für den Standardbetrieb der Gas- und Dampfturbinenanlage mit vergleichsweise hohem Wirkungsgrad ausgelegten Normalwert auf einen kleineren Aktivierungswert abgesenkt. Hierdurch erfolgt eine Erhöhung des Speisewassermassenstroms durch das Regelungssystem. Dies hat bei etwa gleichbleibendem Wärmeangebot des Rauchgases unmittelbar eine Reduktion der Überhitzung respektive der Temperatur des Strömungsmediums am Verdampferaustritt zur Folge. Schussfolgernd reduzieren sich auch die Materialtemperaturen der betroffenen Heizflächen, also vom Verdampfer und vom stromabwärts gelegenen Überhitzer. Als Folge dieser Absenkung der Materialtemperatur wird schließlich thermische Energie aus den Heizflächen des Verdampfers und des Überhitzers aufgrund des erhöhten Durchflusses des Mediums mit verringerter Mediumstemperatur ausgespeichert und in der Dampfturbine in Form von zusätzlicher Leistung entbunden.

Dabei wird es als vorteilhaft angesehen, wenn zwischen den beiden Überhitzungssollwerten abrupt und sprunghaft, vorzugsweise mit einer Schaltzeit von maximal einer Sekunde oder darunter, umgeschaltet wird. Auf diese Weise soll, als Reaktion auf Frequenzstörungen im Stromverbundnetz, die Leistungssofortreserve in möglichst kurzer Zeit zur Verfügung stehen.

Weil mit kleiner werdendem Aktivierungswert die Höhe der Leistungssofortreserve steigt, ist es weiter von Vorteil, für die Temperaturüberhöhung einen Wert nahe der Siedetemperatur des Mediums zu wählen. Gleichzeitig erweist sich eine zu starke Annäherung an die Siedetemperatur als nachteilig, da in diesem Fall vermehrt unerwünschtes Restwasser am Verdampferausgang anfallen kann.

In diesem Zusammenhang wird als Aktivierungswert eine Temperaturüberhöhung gegenüber der Siedetemperatur des Mediums zwischen 5 K und 15 K als diesbezüglich sinnvoller Kompromiss angesehen. Als Normalwert für den Standardbetrieb von Abhitzedampferzeuger und Dampfturbine wird hingegen eine Temperaturüberhöhung zwischen 30 K und 40 K im Minimum angestrebt.

Zugunsten einer genaueren Vorgabe des thermodynamischen Zustandes des Frischdampfes ist es in einer weiter verbesserten Verfahrensvariante vorgesehen, den Siedepunkt nicht als festen Wert in einem Speicher zu hinterlegen, sondern indirekt über eine vorzugsweise permanente Druckmessung am Verdampferein- oder Verdampferausgang zu bestimmen.

In einer darüber hinaus sehr zweckmäßigen Verfahrensversion erfolgt die Berechnung des Primärsollwerts für den Speisewassermassenstrom durch Quotientenbildung. Dabei ist als Zähler der Wärmestromkennwert, der den vom Rauchgas an den Verdampfer übertragenen Wärmestrom charakterisiert, unter Berücksichtigung der in den Bauteilen des Verdampfers zwischengespeicherten Wärmebeträge, vorgesehen. Der Nenner wiederum wird aus der Differenz zwischen einem Enthalpiesollwert des Mediums am Verdampferausgang, charakterisiert durch den entsprechenden Überhitzungssollwert sowie durch den gemessenen Druck am Verdampferausgang, und der ermittelten Enthalpie des Mediums am Verdampfereingang, die ihrerseits über eine entsprechende Temperatur- sowie Druckmessung bestimmt werden kann, gebildet. Somit ist ein Grundsollwert des Speisewassermassenstroms gegeben, der im eingeregelten Zustand des Systems im günstigsten Fall die geforderten Sollwerte auch dauerhaft hervorruft. Jener wird per Definition als 100-%-Zustand oder Ausgangszustand des entsprechenden Lastfalls angesehen. Dies gilt unabhängig davon, ob sich das System aus Abhitzedampferzeuger und Dampfturbine im Teil- oder im Volllastbetrieb befindet. Das Gesamtregelungssystem, welches typischerweise in einem begrenzten Wertebereich besonders effektiv arbeitet, wird hierdurch stets in genau diesem Wertebereich gehalten.

Gemäß eines bevorzugten Regelungssystems zur Umsetzung des erfindungsgemäßen Verfahrens ist ergänzend zum prädiktiven Regelkreis ein zweiter parallel arbeitender Regelkreis vorgesehen. Mit Hilfe dieses zweiten Regelkreises wird ein Sekundärsollwert für den Speisewassermassenstrom bestimmt. Dazu erfolgt eine Differenzbildung aus der ermittelten Enthalpie des Mediums am Verdampferausgang und der entsprechenden Enthalpiesollwertvorgabe. Der Sekundärsollwert dient dabei quasi als Korrekturwert, der die Genauigkeit der Regelung weiter steigern soll und in Fällen, bei denen der Primärsollwert systembedingt hohe Fehler aufweist oder schwankt, korrigierend bzw. stabilisierend eingreift.

Insbesondere bei Verwendung eines Korrekturreglers, mit dem der Sekundärsollwert in eine angepasste Relativgröße umgewandelt wird, ist es in diesem Kontext besonders zweckmäßig, beide Sollwerte für den Speisewassermassenstrom multiplikativ miteinander zu verknüpfen. Damit kann der Einfluss von absoluten Größen auf das Regelungssystem weiter verringert werden.

Alternativ zur Vorgabe des Überhitzungssollwertes, also einer Temperatur, kann im Regelungssystem auch ein Enthalpiesollwert vorgegeben sein, der entweder über charakteristische Größen ermittelt wird oder auf diese bestimmend einwirkt. In jedem Fall soll der Wechsel zwischen dem dazugehörigen Normalwert und dem dazugehörenden Aktivierungswert bewirken, dass das Wärmeangebot auf eine größere Menge an Speisewasser umverteilt wird.

Bei der Zurückversetzung des Systems in den Standardbetrieb kann es von Vorteil sein, nicht sprunghaft vom Aktivierungswert auf den Normalwert zurückzuschalten, sondern kontinuierlich und damit zeitverzögert zurückzuregeln. Dies kann beispielweise synchron mit der Leistungssteigerung der Gasturbine erfolgen, wenn eine kontinuierliche Leistung des Gesamtkraftwerks während dieser Zeit gewünscht ist. Zu diesem Zweck kann die Regelvorrichtung an geeigneter Stelle mit entsprechenden Verzögerungsgliedern ausgestattet sein.

Das hier beschriebene Verfahren zum Betreiben eines Abhitzedampferzeugers sowie einer nachgeschalteten Dampfturbine, mit der Option zwischenzeitlich eine Leistungssofortreserve freizusetzen, wird vorzugsweise in einer kombinierten Gas- und Dampfturbinenanlage eingesetzt. Hier dient diese Leistungssofortreserve in erster Linie als schnell verfügbarer Leistungspuffer, da die zusätzliche Leistung in relativ kurzer Zeit freigesetzt werden kann. Mit Hilfe des Leistungspuffers kann ein begrenzter Zeitraum überbrückt werden, der ausreicht, um die verzögerte Leistungserhöhung durch die Gasturbine (begrenzt durch deren konstruktions- und betriebsbedingte maximale Laständerungsgeschwindigkeit) zumindest teilweise zu kompensieren. Der gesamte Kraftwerksblock macht durch diese Maßnahme unmittelbar einen Leistungssprung und kann durch die parallel initiierte Leistungssteigerung der Gasturbine auch dieses Leistungsniveau dauerhaft halten oder sogar überschreiten.

Es bleibt abschließend festzuhalten, dass das erfindungsgemäße Verfahren auch ohne invasive bauliche Maßnahmen zu realisieren ist. Es kann allein durch eine Implementierung zusätzlicher Bausteine im Regelungssystem umgesetzt werden. Somit werden eine höhere Anlagenflexibilität und ein höherer Anlagennutzen ohne zusätzliche Kosten erzielt.

Darüber hinaus ist das Verfahren unabhängig von anderen Maßnahmen, so dass auch beispielsweise angedrosselte Turbinenventile zusätzlich geöffnet werden können, um die Leistungserhöhung der Dampfturbine noch zu verstärken. Des Weiteren kann simultan eine Regelung der Einspritzmassenströme von im Abhitzedampferzeuger vorgesehenen Einspritzkühlern oder dergleichen mit dem gleichen Regelungsziel erfolgen. Die Wirksamkeit des Verfahrens bleibt durch diese parallelen Maßnahmen zum größten Teil unberührt.

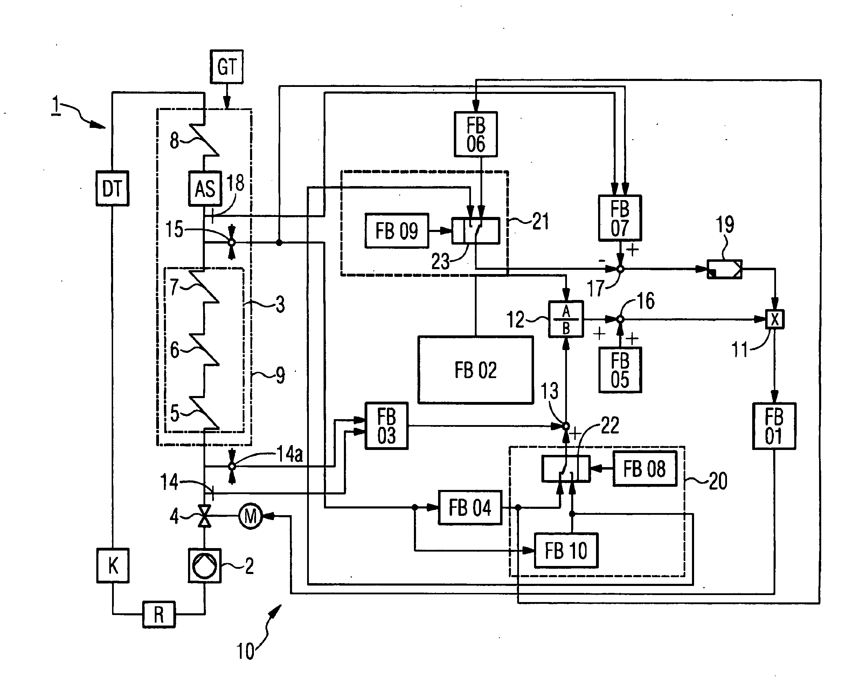

Ein Ausführungsbeispiel der Erfindung wird nachfolgend anhand eines Blockdiagramms näher erläutert. Es zeigt die Figur nach Art eines Blockdiagramms eine schematische Darstellung einer Gas- und Dampfturbinenanlage mit einem zugehörigen Regelsystem.

Das erfindungsgemäße Verfahren wird im Ausführungsbeispiel zum Betreiben einer kombinierten Gas- und Dampfturbinenanlage (GUD-Anlage) genutzt. Der Übersichtlichkeit halber wird dabei eine Dampfturbine DT mit nur einer Druckstufe betrachtet. Eine Erweiterung auf mehrere Druckstufen und entsprechende Zwischenüberhitzungsstufen ist in diesem Zusammenhang für den zuständigen Fachmann problemlos möglich.

Die Dampfturbine DT der GUD-Anlage ist eingebunden in einen Speisewasserkreislauf 1. Ausgehend von einem Speisewasserreservoir R wird das Speisewasser mittels der Pumpe 2 in einen Zwangsdurchlauf-Verdampfer 3 befördert. Diesem ist in der Regel zusätzlich ein hier nicht mit abgebildeter Economizer zur Vorwärmung des Speisewassers vorgeschaltet. Der Speisewassermassenstrom in den Zwangsdurchlauf-Verdampfer 3 kann über ein Regelventil 4, dessen Ventilstellung durch einen dazugehörigen Stellmotor M eingestellt wird, variiert werden. Im Zwangsdurchlauf-Verdampfer 3, nachfolgend auch kurz Verdampfer 3 genannt, sind mehrere Heizflächen vorgesehen. Konstruktionsbedingt kann man diese ihrer Abfolge im Speisewasserkreislauf 1 entsprechend als Economizer- 5, Verdampfer- 6 und Überhitzerheizflächen 7 bezeichnen. Am Verdampferausgang liegt das Speisewasser in seine Gasphase überführt vor und wird als Dampf mit Hilfe nachgeschalteter Überhitzerheizflächen 8 weiter aufgeheizt. Zwischen Verdampfer 3 und den Überhitzerheizflächen 8 befindet sich weiter ein Abscheider AS, der im Bedarfsfall unerwünschtes Restwasser vom Dampf abtrennt. Der überhitzte Dampf dient schließlich zur Gewinnung von elektrischer Energie in einer Dampfturbine DT und kondensiert im nachgeschalteten Kondensator K wieder zu Speisewasser, welches in das Speisewasserreservoir R zurückgeführt wird. Sämtliche Heizflächen des Speisewasserkreislaufs 1 sind in einem Heißgaskanal 9 angeordnet. In jenen Heißgaskanal 9 werden die Abgase einer Gasturbine GT eingeleitet. Diese überströmen zunächst die Überhitzer- 7, 8, dann die Verdampfer- 6 und schließlich die Economizerheizflächen 5 sowie, falls vorhanden, die Heizflächen des Economizers. Auf diese Weise ist ein Abhitzedampferzeuger realisiert, mit dem, infolge der Kombination mit der Dampfturbine DT, die in den Abgasen der Gasturbine GT gespeicherte Wärme zumindest teilweise zur Gewinnung von elektrischer Energie genutzt werden kann.

Zur Gewährleistung eines möglichst hohen Wirkungsgrades muss der Speisewassermassenstrom im Speisewasserkreislauf 1 reguliert und an eventuelle Schwankungen der Heißgaseinspeisung durch die Gasturbine GT angepasst werden. Hierfür ist ein entsprechendes Regelungssystem 10 vorgesehen, welches den Stellmotor M ansteuert und damit die Stellung des Regelventils 4 anpasst.

Aufgebaut ist besagtes Regelungssystem 10 im Wesentlichen aus so genannten Funktionsbausteinen FB 01 ... FB 10. Diese Einheiten können Messsignale verarbeiten, auf Daten zugreifen, die in einem Speicher hinterlegt sind, und diese Signale bzw. Daten über logische Verknüpfungen in Funktionswerte umwandeln, die dann entweder an weitere Funktionsbausteine FB 01 ... FB 10 weitergegeben werden oder als Befehlscode zur Steuerung nachgeschalteter Geräte, wie dem Stellmotor M, dienen. Im Ausführungsbeispiel werden die Steuerbefehle für den Stellmotor M vom Funktionsbaustein FB 01 generiert. Als Datengrundlage oder Eingangssignale werden dabei zwei über zwei parallel arbeitende Regelkreise ermittelte Sollwerte herangezogen, die über ein Multiplizierglied 11 miteinander verknüpft sind.

Einer der beiden Regelkreise ist als so genannter prädiktiver oder vorrausschauender Regelkreis konzipiert. Mit diesem nachfolgend Primärkreis genannten Regelkreis soll unter Berücksichtigung der Systemreaktionszeiten vorauskalkuliert werden, mit welchem Speisewassermassenstrom in einem nachfolgenden Zeitintervall ein grundsätzlich sicherer Betrieb mit darüber hinaus besonders hohem Wirkungsgrad erzielt werden kann. Die dazugehörige Größe, welche von der Dimension her einen Massenstrom repräsentiert, wird als Primärsollwert bezeichnet und entspricht in jenem nachfolgenden Zeitintervall dem ersten der beiden Sollwerte, die über das Multiplizierglied 11 miteinander verknüpft werden.

Zur Bestimmung des Primärsollwerts werden zwei Größen A und B an einem Dividierglied 12 gegenübergestellt. Die Größe A, ermittelt über einen Funktionsbaustein FB 02, repräsentiert dabei das für das Medium Wasser zur Verfügung stehende Wärmeangebot, also die aus dem Abgas der Gasturbine GT aus- und in den Verdampfer 3 eingespeicherte Wärme abzüglich der in den Heizflächen des Verdampfers 5, 6, 7 zwischengespeicherten Beträge. Genau dieses Wärmeangebot soll genutzt werden, um eine bestimmte Enthalpieänderung B des Mediums im Verdampfer 3 hervorzurufen. Jene Enthalpieänderung B ergibt sich durch Differenzbildung am Addierglied 13 zwischen dem gewünschten Enthalpiewert des Mediums am Verdampferausgang und dem Enthalpiewert des Mediums am Verdampfereingang. Der Enthalpiewert des Mediums am Verdampfereingang wird in dieser Kalkulation als gegeben aber variabel angesehen und über einen Funktionsbaustein FB 03, der auf die Messsignale eines Temperatursensors 14 und eines Drucksensors 14a zugreift, bestimmt. Hingegen soll der thermodynamische Zustand des Mediums und infolgedessen auch der Enthalpiewert am Verdampferausgang vorgegeben werden. Dazu ist im Funktionsbaustein FB 04 ein Überhitzungssollwert hinterlegt. Die Temperatur des Dampfes am Verdampferausgang soll demnach um einen vorgegebenen Betrag, dem Normalwert, über der Siedetemperatur des Mediums, welche ihrerseits mit Hilfe der Daten eines Drucksensors 15 am Verdampferausgang ermittelt wird, liegen. Der hieraus folgende Enthalpiesollwert des Mediums am Verdampferausgang wird vom Funktionsbaustein FB 04 dem Subtrahierglied 13 zugeführt.

Bei der Berechnung des Primärsollwerts können darüber hinaus noch weitere Größen, auch repräsentative Größen für die dynamischen Einflüsse, berücksichtigt werden. Ein entsprechender Korrekturterm wird von einem Funktionsglied FB 05 bestimmt und dann an einem dem Dividierglied 12 nachgeschalteten Addierglied 16 hinzugefügt.

Der zweite, auch Sekundärkreis genannte, Regelkreis ist als reagierender Regelkreis ausgeführt und soll durch eine Art Feinabstimmung die Genauigkeit des gesamten Regelungssystems 10 weiter steigern. Dies geschieht mit Hilfe eines Sollwert-Istwert-Abgleichs an einem Subtrahierglied 17. Als Sollwert wird dem Subtrahierglied 17 über den Funktionsbaustein FB 06 der vom Funktionsbaustein FB 04 errechnete Enthalpiesollwert des Mediums am Verdampferausgang zugeführt. Der dazugehörige Enthalpieistwert basiert auf den Messsignalen eines Temperatursensors 18 sowie des Drucksensors 15 am Verdampferausgang und wird von einem Funktionsbaustein FB 07 bestimmt. Die hierüber ermittelte Sollwert-Istwert-Abweichung wird schließlich einem PI-Reglerglied 19 zugeführt, welches ausgangsseitig den zweiten Sollwert oder Sekundärsollwert für das Multiplizierglied 11 zur Verfügung stellt. Bei diesem Sollwert handelt es sich um eine dimensionslose Relativgröße, die unabhängig davon, ob sich das Kombikraftwerk im Volllast- oder im Teillastbetrieb befindet, nahe dem Wert 1 liegt. Da die Komponenten eines Regelkreises nur in einem begrenzten Wertebereich besonders effektiv arbeiten, kann durch einen Rückbezug auf eine derartige Relativgröße dafür gesorgt werden, dass der zu erwartende Wertebereich unabhängig von absoluten Größen mit dem bezüglich der Komponenten günstigen Wertebereich weitestgehend übereinstimmt.

Zur Freisetzung einer Leistungssofortreserve wird erfindungsgemäß der Überhitzungssollwert von einem für den stationären Betrieb der Gas- und Dampfturbinenanlage mit vergleichsweise hohem Wirkungsgrad ausgelegten Normalwert auf einen kleineren Aktivierungswert abgesenkt. Diese Sollwertabsenkung wirkt sich sowohl auf den Primär- als auch auf den Sekundärkreis des Regelungssystems 10 aus. Die hiervon betroffenen Bereiche des Systems sind durch die Markierungen 20 und 21 hervorgehoben.

Exemplarisch wird im Ausführungsbeispiel die Änderung des Überhitzungssollwerts sprunghaft vollzogen. Daher kann diese Änderung durch Umlegung eines Schalters 22, 23 in jedem Regelkreis bewirkt werden. Dabei wird jeder Schalter über einen dazugehörigen Funktionsbaustein FB 08, FB 09 angesteuert, wobei die Umschaltung der beiden Schalter 22, 23 im Wesentlichen zeitgleich erfolgt. Alternativ dazu ist auch eine Ausführung ohne die Schalter 22, 23 möglich. In diesem Fall übernehmen die Funktionsbausteine FB 08, FB 09 eine komplexere Aufgabe. Statt einfach nur zwischen zwei Werten hin- und herzuschalten, geben die Funktionsbausteine FB 08, FB 09 in Abhängigkeit einer gemessenen Frequenzstörung im Stromverbundnetz einen angepassten Überhitzungssollwert, der in einem hinterlegten Wertebereich liegt, selbstständig vor.

Mit der Absenkung des Überhitzungssollwerts geht auch eine Absenkung des Enthalpiesollwerts des Mediums am Verdampferausgang einher. Jener auf dem Aktivierungswert basierende Enthalpiesollwert wird über einen zusätzlichen Funktionsbaustein FB 10 berechnet. Dieser Enthalpiesollwert ersetzt während der Aktivierungsphase der Leistungssofortreserve den zum Normalwert gehöhrenden Enthalpiesollwert sowohl am Subtrahierglied 17 des Sekundärkreises als auch am Subtrahierlied 13 des Primärkreises.

Als Konsequenz steigen der Speisewassermassenstrom in den Verdampfer 3 und damit der Speisewasserdurchfluss durch selbigen. Mit dieser Maßnahme wird thermische Energie aus dem Verdampfer 3 und den nachfolgenden Überhitzerheizflächen aufgrund der höheren Durchströmung mit vergleichsweise geringeren Mediumstemperaturen ausgespeichert und in der Dampfturbine DT in Form von zusätzlicher Leistung entbunden.

## Patentansprüche

1. Verfahren zum Betreiben einer kombinierten Gas- und Dampfturbinenanlage mit einer Gasturbine (GT), einem der Gasturbine (GT) abgas- oder heizgasseitig nachgeschalteten Abhitzedampferzeuger, der mindestens eine von einem Strömungsmedium durchströmbare Verdampferheizfläche (6) aufweist, und mit einer dem Abhitzedampferzeuger strömungsmediumseitig nachgeschalteten Dampfturbine (DT), bei der das Strömungsmedium dem Abhitzedampferzeuger in Form von Speisewasser zugeführt wird, wobei ein primärer Regelkreis für eine prädiktive Regelung des Speisewassermassenstroms vorgesehen ist, und wobei anhand eines Überhitzungssollwertes, der für die am Austritt der Verdampferheizfläche (6) vorliegende Temperaturüberhöhung des Strömungsmediums gegenüber seiner Siedetemperatur charakteristisch ist, und anhand eines Wärmestromkennwerts, der für den über die Verdampferheizfläche (6) vom Heizgas auf das Strömungsmedium übertragenen Wärmestrom charakteristisch ist, unter Berücksichtigung der in den Verdampferheizflächenbauteilen eingespeicherten Wärme ein Primärsollwert für den Speisewassermassenstrom ermittelt und der Speisewassermassenstrom entsprechend nachgeregelt wird, **dadurch gekennzeichnet, dass**
zur Aktivierung einer kurzfristig verfügbaren Leistungssofortreserve der Überhitzungssollwert von einem für den stationären Betrieb der Gas- und Dämpfturbinenanlage mit vergleichsweise hohem Wirkungsgrad ausgelegten Normalwert auf einen kleineren Aktivierungswert abgesenkt wird.

2. Verfahren nach Anspruch 1, wobei die Umschaltung abrupt und sprunghaft vorgenommen wird.

3. Verfahren nach Anspruch 1 oder 2, wobei der Aktivierungswert derart gewählt wird, dass die Temperaturüberhöhung während der Aktivierungsphase positiv bleibt.

4. Verfahren nach Anspruch 3, wobei während der Aktivierungsphase eine Temperaturüberhöhung im Bereich zwischen 5 K und 15 K, vorzugsweise 10 K, eingestellt wird.

5. Verfahren nach einem der der Ansprüche 1 bis 4, wobei während dem der Aktivierungsphase vorangehenden Normalbetrieb eine Temperaturüberhöhung von mindestens 30 K, vorzugsweise mindestens 40 K, eingestellt wird.

6. Verfahren nach einem der Ansprüche 1 bis 5, wobei die Siedetemperatur des Strömungsmediums am Austritt der Verdampferheizfläche (6) anhand des dort gemessenen Drucks des Strömungsmediums und gegebenenfalls anhand von weiteren Messgrößen ermittelt wird.

7. Verfahren nach einem der Ansprüche 1 bis 6, wobei zur Ermittlung des Primärsollwertes für den Speisewassermassenstrom der Quotient aus dem Wärmestromkennwert und einem für die Enthalpieerhöhung des Strömungsmediums in der Verdampferheizfläche (6) charakteristischen Enthalpiedifferenzkennwert gebildet wird, und wobei der Enthalpiedifferenzkennwert anhand des in einen Enthalpiesollwert umgerechneten Überhitzungssollwertes und der gemessenen Enthalpie des Strömungsmediums am Eintritt der Verdampferheizfläche (6) ermittelt wird.

8. Verfahren nach einem der Ansprüche 1 bis 7, wobei mit Hilfe eines sekundären Regelkreises durch einen Vergleich der gemessenen Enthalpie des Strömungsmediums am Ausgang der Verdampferheizfläche (6) mit einem dort vorgegebenen Enthalpiesollwert ein Sekundärsollwert für den Speisewassermassenstrom ermittelt wird, und wobei der Speisewassermassenstrom anhand eines aus dem Primärsollwert und dem Sekundärsollwert gebildeten Gesamtsollwertes nachgeregelt wird.

9. Verfahren nach Anspruch 8, wobei der Primärsollwert und der Sekundärsollwert zur Bildung des Gesamtsollwertes miteinander multipliziert werden.

10. Verfahren nach Anspruch 8 oder 9, wobei während der Aktivierungsphase der Enthalpiesollwert von einem für den stationären Betrieb der Gas- und Dampfturbinenanlage mit vergleichsweise hohem Wirkungsgrad ausgelegten Ausgangswert auf einen kleineren Aktivierungswert umgeschaltet wird.

11. Verfahren nach Anspruch 10, wobei der Enthalpiesollwert im Wesentlichen simultan mit dem Temperatursollwert umgeschaltet wird.

12. Verfahren nach einem der Ansprüche 1 bis 11, wobei am Ende der Aktivierungsphase kontinuierlich und zeitverzögert von dem jeweiligen Aktivierungswert auf den zugehörigen Normalwert zurückgefahren wird.

13. Kombinierte Gas- und Dampfturbinenanlage mit einer Gasturbine (GT), einem der Gasturbine (GT) abgasseitig nachgeschalteten Abhitzedampferzeuger, der mindestens eine von einem Strömungsmedium durchströmbare Verdampferheizfläche (6) aufweist, mit einer dem Abhitzedampferzeuger strömungsmediumsseitig nachgeschalteten Dampfturbine (DT), und mit einem über ein Regelventil (4) einstellbaren Speisewasserzulauf für den Abhitzedampferzeuger, wobei eine Regelvorrichtung für den Speisewassermassenstrom vorgesehen ist, die Mittel zur Durchführung des Verfahrens nach einem der Ansprüche 1 bis 12 aufweist.

14. Regelvorrichtung für eine kombinierte Gas- und Dampfturbinenanlage, die Mittel zur Durchführung des Verfahrens nach einem der Ansprüche 1 bis 12 aufweist.

## Claims

1. Method for operating a combined gas and steam turbine system comprising a gas turbine (GT), a waste heat steam generator which is located downstream of the gas turbine (GT) in the direction of flow of the exhaust gas or fuel gas and includes at least one evaporator heating area (6) through which a moving fluid can flow, and a steam turbine (DT) which is located downstream of the waste heat steam generator in the direction of flow of the moving fluid, in which the moving fluid is fed to the waste heat steam generator in the form of feed water, wherein a primary control loop is provided for a predictive control of the feed water flow rate, and wherein taking into account the heat stored in the components in the evaporator heating area, a primary desired value for the feed water flow rate is determined on the basis of a desired overheating value that is characteristic of the temperature by which the moving fluid exceeds its boiling point as the moving fluid exits from the evaporator heating area (6) and on the basis of a heat flow parameter that is characteristic of the heat flow transferred from the fuel gas to the moving fluid via the evaporator heating area (6), and the feed water flow rate is adjusted accordingly, **characterised in that**, in order to activate a temporarily available instantaneous power reserve the desired overheating value is lowered from a normal value defined for the stationary operation of the gas and steam turbine system at a comparatively high efficiency to a smaller activation value.

2. Method according to claim 1, wherein the switchover is made abruptly and rapidly.

3. Method according to claim 1 or 2, wherein the activation value is chosen in such a way that the temperature rise remains positive during the activation phase.

4. Method according to claim 3, wherein a temperature rise in the range between 5 K and 15 K, preferably 10 K, is set during the activation phase.

5. Method according to one of claims 1 to 4, wherein a temperature rise of at least 30 K, preferably at least 40 K, is set during normal operation preceding the activation phase.

6. Method according to one of claims 1 to 5, wherein the boiling temperature of the moving fluid at the outlet of the evaporator heating area (6) is determined with the aid of the pressure of the moving fluid measured there and optionally with the aid of further measured variables.

7. Method according to one of claims 1 to 6, wherein the quotient is formed from the heat flow parameter and an enthalpy differential value characteristic of the increase in the enthalpy of the moving fluid in the evaporator heating area (6) in order to determine the primary desired value for the feed water flow rate, and wherein the enthalpy differential value characteristic is determined with the aid of the desired overheating value converted into a desired enthalpy value and the measured enthalpy of the moving fluid at the inlet of the evaporator heating area (6).

8. Method according to one of claims 1 to 7, wherein a secondary desired value for the feed water flow rate is determined with the aid of a secondary control loop by comparing the measured enthalpy of the moving fluid at the outlet of the evaporator heating area (6) with a desired enthalpy value predefined there, and wherein the feed water flow rate is adjusted with the aid of a total desired value formed from the primary desired value and the secondary desired value.

9. Method according to claim 8, wherein the primary desired value and the secondary desired value are multiplied by each other to form the total desired value.

10. Method according to claim 8 or 9, wherein during the activation phase the desired enthalpy value is switched over from a starting value defined for the stationary operation of the gas and steam turbine system at a comparatively high efficiency to a smaller activation value.

11. Method according to claim 10, wherein the desired enthalpy value is switched over substantially simultaneously with the desired temperature value.

12. Method according to one of claims 1 to 11, wherein at the end of the activation phase the process returns continuously and with a delay from the respective activation value to the associated normal value.

13. Combined gas and steam turbine system comprising a gas turbine (GT), a waste heat steam generator which is located downstream of the gas turbine (GT) in the direction of flow of the exhaust gas and includes at least one evaporator heating area (6) through which a moving fluid can flow, and a steam turbine (DT) which is located downstream of the waste heat steam generator in the direction of flow of the moving fluid, and comprising a feed water intake, which can be adjusted by way of a control valve (4), for the waste heat steam generator, wherein a control device for the feed water flow rate is provided which comprises means for carrying out the method according to any one of claims 1 to 12.

14. Control device for a combined gas and steam turbine system which comprises means for carrying out the method according to any one of claims 1 to 12.

## Revendications

1. Procédé pour faire fonctionner une installation combinée de turbine à gaz et de turbine à vapeur, comprenant une turbine (GT) à gaz, un générateur de vapeur à récupération de la chaleur perdue monté en aval du côté du gaz d'échappement ou du gaz chaud de la turbine (GT) à gaz et ayant au moins une surface (6) de chauffe d'évaporateur à travers laquelle peut passer un fluide en écoulement, et ayant une turbine (DT) à vapeur montée en aval du côté du fluide en écoulement du générateur de vapeur à récupération de la chaleur perdue, dans lequel le fluide en écoulement est retourné au générateur de vapeur à récupération de la chaleur perdue, sous la forme d'eau d'alimentation, un circuit primaire de régulation pour une régulation prédictive du courant massique d'eau d'alimentation étant prévu, et dans lequel, au moyen d'une valeur de consigne de surchauffe, qui est caractéristique de l'élévation, par rapport à son point d'ébullition, de température du fluide en écoulement présente à la sortie de la surface (6) de chauffe de l'évaporateur, et au moyen d'une valeur caractéristique du flux calorifique qui est caractéristique du flux calorifique transmis par la surface (6) de chauffe de l'évaporateur du gaz chaud au fluide en écoulement, en tenant compte de la chaleur emmagasinée dans les éléments constitutifs des surfaces de chauffe de l'évaporateur, on détermine une valeur de consigne primaire du courant massique d'eau d'alimentation et on régule en conséquence le courant massique d'eau d'alimentation, **caractérisé en ce que** pour l'activation d'une réserve immédiate de puissance disponible à délai court, on abaisse la valeur de consigne de surchauffe d'une valeur normale, conçue pour le fonctionnement en régime permanent de l'installation de turbine à gaz et de turbine à vapeur à un rendement relativement grand, à une valeur d'activation plus petite.

2. Procédé suivant la revendication 1, dans lequel on effectue la commutation de façon abrupte et brusque.

3. Procédé suivant la revendication 1 ou 2, dans lequel on choisit la valeur d'activation, de manière à ce que l'élévation de température reste positive pendant la phase d'activation.

4. Procédé suivant la revendication 3, dans lequel, pendant la phase d'activation, on règle une élévation de température dans la plage comprise entre 5 K et 15 K, de préférence de 10 K.

5. Procédé suivant l'une des revendications 1 à 4, dans lequel, pendant le fonctionnement normal précédant la phase d'activation, on règle une élévation de température d'au moins de 30 K, de préférence d'au moins 40 K.

6. Procédé suivant l'une des revendications 1 à 5, dans lequel on détermine le point d'ébullition du fluide en écoulement à la sortie de la surface (6) de chauffe de l'évaporateur, au moyen de la pression qui y est mesurée du fluide en écoulement et le cas échéant au moyen d'autres grandeurs de mesure.

7. Procédé suivant l'une des revendications 1 à 6, dans lequel, pour la détermination de la valeur de consigne primaire du courant massique d'eau d'alimentation, on forme le quotient de la valeur caractéristique du flux calorifique par une valeur caractéristique de différence d'enthalpie, caractéristique de l'augmentation de l'enthalpie du fluide en écoulement dans la surface (6) de chauffe de l'évaporateur, et dans lequel on détermine la valeur caractéristique de la différence d'enthalpie au moyen de la valeur de consigne de surchauffe recalculée en une valeur de consigne d'enthalpie et de l'enthalpie mesurée du fluide en écoulement à l'entrée de la surface (6) de chauffe de l'évaporateur.

8. Procédé suivant l'une des revendications 1 à 7, dans lequel, à l'aide d'un circuit de régulation secondaire, on détermine, par une comparaison de l'enthalpie mesurée du fluide en écoulement à la sortie de la surface (6) de chauffe de l'évaporateur à une valeur de consigne d'enthalpie qui est donnée à l'avance, une valeur de consigne secondaire du courant massique de l'eau d'alimentation, et dans lequel on régule le courant massique de l'eau d'alimentation, au moyen d'une valeur de consigne globale formée de la valeur de consigne primaire et de la valeur de consigne secondaire.

9. Procédé suivant la revendication 8, dans lequel on multiplie la valeur de consigne primaire par la valeur de consigne secondaire pour la formation de la valeur de consigne globale.

10. Procédé suivant la revendication 8 ou 9, dans lequel, pendant la phase d'activation, on passe la valeur de consigne d'enthalpie d'une valeur initiale, conçue pour le fonctionnement en régime permanent de l'installation de turbine à gaz et de turbine à vapeur à un rendement relativement grand, à une valeur d'activation plus petite.

11. Procédé suivant la revendication 10, dans lequel on change la valeur de consigne d'enthalpie sensiblement simultanément avec la valeur de consigne de température.

12. Procédé suivant l'une des revendications 1 à 11, dans lequel, à la fin de la phase d'activation, on revient, en continu et d'une manière retardée dans le temps, de la valeur d'activation respective à la valeur normale associée.

13. Installation combinée de turbine à gaz et de turbine à vapeur ayant une turbine (GT) à gaz, un générateur de vapeur à récupération de la chaleur perdue monté en aval du côté du gaz d'échappement de la turbine (GT) à gaz, et ayant au moins une surface (6) de chauffe d'évaporateur pouvant être traversée par un fluide en écoulement, une turbine (DT) à vapeur montée en aval du côté du fluide en écoulement du générateur de vapeur à récupération de la chaleur, et une arrivée d'eau d'alimentation, réglable par une vanne (4) de régulation pour le générateur de vapeur à récupération de la chaleur perdue, dans laquelle il est prévu un dispositif de régulation du courant massique de l'eau d'alimentation, qui a des moyens pour effectuer le procédé suivant l'une des revendications 1 à 12.

14. Dispositif de régulation d'une installation combinée de turbine à gaz et de turbine à vapeur, qui a des moyens pour effectuer le procédé suivant l'une des revendications 1 à 12.
